# FASCICULE DE BREVET EUROPEEN

(11) **EP 0 948 720 B1**
(45) Date de publication et mention de la délivrance du brevet: **31.03.2004**
(21) Numéro de dépôt: 98954500.9
(22) Date de dépôt: 29.10.1998
(51) Int. Cl.: F16F 1/00

(54) **DOUBLE VOLANT AMORTISSEUR DE TORSION A RONDELLES D'ETANCHEITE, NOTAMMENT POUR VEHICULES AUTOMOBILES**
ZWEIMASSENTORSIONSSCHWUNGRAD MIT DICHTUNGSRINGE, INSBESONDERE FÜR KRAFTFAHRZEUGE
DOUBLE WHEEL FOR TORSION DAMPING WITH SEALING WASHERS, IN PARTICULAR FOR MOTOR VEHICLES

(30) Priorité: 29.10.1997 FR 9714008
(43) Date de publication de la demande: 13.10.1999
(73) Titulaire: VALEO EMBRAYAGES s.a.s., 80009 Amiens Cedex 1 (FR)
(72) Inventeur: BONFILIO, Ciriaco, F-92110 Clichy (FR)
(74) Mandataire: Lemaire, Marc
(86) Numéro de dépôt international: PCT/FR1998/002317
(87) Numéro de publication internationale: WO 1999/022158

(56) Documents cités:
- DE-A- 19 544 832
- DE-A- 19 733 334
- DE-C- 3 645 309
- US-A- 4 828 533
- US-A- 5 595 539
- US-A- 5 784 928

## Description

La présente invention se rapporte à un double volant amortisseur de torsion, notamment pour véhicules automobiles, comportant deux masses coaxiales montées rotatives l'une par rapport à l'autre à l'encontre d'organes élastiques montés dans un logement. Un tel double volant est décrit dans le document EP-A-0777059.

Dans celui-ci l'une des masses, dite seconde masse, comporte un plateau formant le plateau de réaction d'un embrayage à friction et les organes élastiques comportent des ressorts à boudin - dit aussi ressorts hélicoidaux- interposés chacun entre deux coupelles d'appui. Le plateau de réaction présente un profil de contact de forme globalement polygonal pour contact avec les coupelles d'appui des organes élastiques. L'autre masse, dite première masse, présente des échancrures radialement ouvertes vers l'intérieur pour logement des organes élastiques. Plus précisement les échancrures sont formées à la périphérie interne d'un anneau massif et les coupelles d'appui des organes élastiques sont admises à venir en contact avec le bord des échancrures.

La première masse est destinée à être calée en rotation sur un arbre menant, tandis que la seconde masse est destinée à être calée en rotation de manière débrayable, par l'intermédiaire de l'embrayage à friction, sur un arbre mené.

En pratique, le plateau de réaction est en fonte et le profil de contact avec les coupelles d'appui est venu de moulage avec le plateau de réaction. Il en résulte que l'obtention du profil n'est pas aussi simple que souhaité.

La présente invention a pour objet de palier ces inconvénients de manière simple et économique.

Suivant l'invention, un double volant amortisseur du type sus indiqué est caractérisé en ce que le profil de contact appartient à la périphérie externe d'une première couronne d'orientation axiale rapportée sur le plateau de réaction.

Grâce à l'invention on peut obtenir, de manière simple et économique, aisément le profil désiré du fait que la couronne est distincte du plateau de réaction. On peut donc façonner le profil en réalisant celui-ci par exemple à la presse. Cette couronne est par exemple métallique. Elle est dans une forme de réalisation en tôle emboutie.

Ainsi, on peut obtenir par emboutissage, le profil désiré. Par exemple, les côtés du polygone présentent dans une forme de réalisation deux portions ou tronçons d'extrémité rectilignes et séparés l'un de l'autre par une portion ou tronçon de forme arrondie.

Grâce à l'invention il est crée une isolation thermique du fait que la première couronne est rapportée sur le plateau de réaction, en sorte que le profil de contact atteint des températures moins élevées.

Dans une forme de réalisation, la couronne présente un chanfrein pour réduction de l'encombrement axial et ce chanfrein est avantageusement interrompu au niveau des sommets du profil de contact afin de créer une ventilation et de faciliter la fabrication de la première couronne.

La première couronne est, dans la forme de réalisation, une couronne intérieure, la première masse présentant une couronne extérieure entourant la première couronne.

Cette couronne extérieure est également métallique en étant par exemple en tôle emboutie pour réduction des coûts. La couronne extérieure présente donc dans une forme de réalisation des échancrures ouvertes radialement vers l'intérieur pour logement des organes élastiques.

Les couronnes extérieure et intérieure sont donc accouplées entre elles par les organes élastiques et sont économiques.

Dans une forme de réalisation la première couronne a en section une forme d'equerre et présente donc à l'une de ses extrémités un rebord radial de fixation dirigé vers l'intérieur c'est à dire vers l'axe du double volant amortisseur de torsion, pour fixation de la première couronne au plateau de réaction.

Cette fixation est réalisée dans une forme de réalisation à l'aide d'organes de fixation tel que des rivets, des vis, des boulons. En variante, la fixation est réalisée par collage, permettant de parfaire l'isolation thermique de la périphérie externe de la couronne intérieure. En variante, le rebord radial est fixé par soudage.

La forme en equerre de la première couronne facilite donc sa fixation au plateau de réaction. Cela favorise le refroidissement de la couronne car c'est le rebord radial qui est en contact avec le plateau de réaction. Le rebord radial est avantageusement fixé sur une surépaisseur solidaire du plateau de réaction pour mieux isoler encore thermiquement la première couronne.

La surépaisseur est venue du moulage avec le plateau de réaction. En variante, il s'agit d'une rondelle d'isolation thermique. Cette disposition se marie bien avec une réalisation en matière synthétique de la première couronne. Dans une forme de réalisation, la première couronne est donc en matière synthétique.

Dans une forme de réalisation, le logement de montage des organes élastiques est étanche. Ce logement est fermé par des moyens d'étanchéité intervenant entre les deux masses.

Il peut s'agir par exemple d'une réalisation avec un disque élastique s'appuyant sur le plateau de réaction avec présence de lèvres d'étanchéité comme décrit dans le document FR-2 587 075.

Dans le but de diminuer la température des moyens d'étanchéité, il est proposé, dans une forme de réalisation, que les moyens d'étanchéité comportent une première rondelle d'étanchéité portée par la première masse et une deuxième rondelle d'étanchéité portée par la seconde masse, que la première rondelle d'étanchéité soit fixée à sa périphérie externe à la première masse radialement au-dessus de la deuxième rondelle d'étanchéité et que la périphérie interne de la première rondelle d'étanchéité coopère avec la périphérie externe de la seconde rondelle d'étanchéité fixée à sa périphérie interne à la seconde masse.

Grâce à cette disposition les moyens d'étanchéité sont ménagés car la zone de contact entre la première et la seconde rondelle d'étanchéité est éloignée du plateau de réaction. Ainsi un grand trajet existe entre la zone de contact des rondelles d'étanchéité et la face dorsale du plateau de réaction s'étendant globalement parallèlement aux rondelles d'étanchéité.

Par ailleurs la graisse est ménagée car la première rondelle d'étanchéité est fixée à sa périphérie externe à la première masse, tandis que la deuxième rondelle d'étanchéité est fixée à sa périphérie interne à la seconde masse. En effet, en fonctionnement, la graisse est centrifugée vers l'extérieur en sorte que le trajet entre la périphérie interne de la seconde rondelle d'étanchéité et la périphérie externe de la première rondelle d'étanchéité est relativement grand ce qui permet de diminuer la température de la graisse.

Suivant une caractéristique la seconde rondelle d'étanchéité est plus raide que la première rondelle d'étanchéité.

Il en résulte que c'est la première rondelle d'étanchéité qui détermine le serrage axial c'est-à-dire la pression de contact entre les deux rondelles d'étanchéité.

La première rondelle d'étanchéité est en contact localement avec la face de la seconde rondelle d' étanchéité tournée vers la deuxième masse.

La différence de raideur peut être obtenue en rendant plus épaisse la seconde rondelle d'étanchéité. Bien entendu les deux rondelles peuvent avoir la même épaisseur, la plus grande raideur de la seconde rondelle d'étanchéité provenant du fait que celle-ci présente un porte-à-faux par rapport à sa zone de fixation à la seconde masse, moins important que la partie en porte-à-faux de la première rondelle d'étanchéité.

Ainsi cette première rondelle d'étanchéité est plus souple axialement au niveau de sa périphérie interne que ne l'est la seconde rondelle d'étanchéité au niveau de sa périphérie externe.

Dans une forme de réalisation la première rondelle d'étanchéité est pincée à sa périphérie externe entre un couvercle et une prolongation radiale de la couronne extérieure appartenant à la première masse.

Le couvercle peut présenter différents tronçons décalés axialement les uns par rapport aux autres pour déterminer le porte-à-faux de la première rondelle d'étanchéité.

La seconde rondelle d'étanchéité est pincée à sa périphérie interne entre une surépaisseur solidaire du plateau de réaction de la seconde masse et la couronne intérieure entourée par la couronne extérieure toutes deux avantageusement en tôle pour réduction des coûts.

La première rondelle d'étanchéité est pincée de manière précitée en une zone décalée axialement en direction opposée au plateau de réaction de la seconde masse par rapport à la zone de pincement de la seconde rondelle d'étanchéité.

Ceci permet de déterminer la force d'application (et donc de serrage) de la première rondelle d'étanchéité sur la seconde rondelle d'étanchéité.

Les rondelles d'étanchéité sont économiquement en forme de clinquant métallique de faible épaisseur et sont donc souples.

Dans une forme de réalisation, la seconde masse est montée tournante sur la première masse par l'intermédiaire de moyens de palier du type à palier lisse et comporte deux bagues en forme d'équerre délimitant une gorge dans laquelle est reçu un anneau de la seconde masse décalé axialement en direction de la première masse pour diminuer les échauffements par allongement des trajets et ménager les bagues.

On peut en profiter pour doter la première masse de moyens de frottement agissant sur l'une des bagues. Tout ceci est possible car la première couronne selon l'invention permet de libérer intérieurement de la place notamment pour l'anneau de la deuxième masse.

Le double volant amortisseur est ainsi économique, sa première masse pouvant être réalisée à partir de pièces en tôles solidaires de la couronne de démarreur, tandis que sa deuxième masse est plus légère que celle de l'art antérieur.

De préférence l'embrayage à friction associé au plateau de réaction de la seconde masse comporte un dispositif de rattrapage d'usure en sorte que lors du désengagement de l'embrayage les forces de serrage exercées sur les bagues restent sensiblement constantes. Il en est de même lorsque l'embrayage est engagé.

La description qui va suivre illustre l'invention en regard des dessins annexés dans lesquels :
- la figure 1 est une vue en coupe axiale d'un double volant amortisseur selon l'invention ;
- la figure 2 est une vue partielle de l'extrémité libre des couronnes extérieure et intérieure sans les organes élastiques intervenant entre celles-ci ;
- la figure 3 est une vue partielle des organes élastiques ;
- la figure 4 est une vue analogue à la figure 1 pour un autre exemple de réalisation.

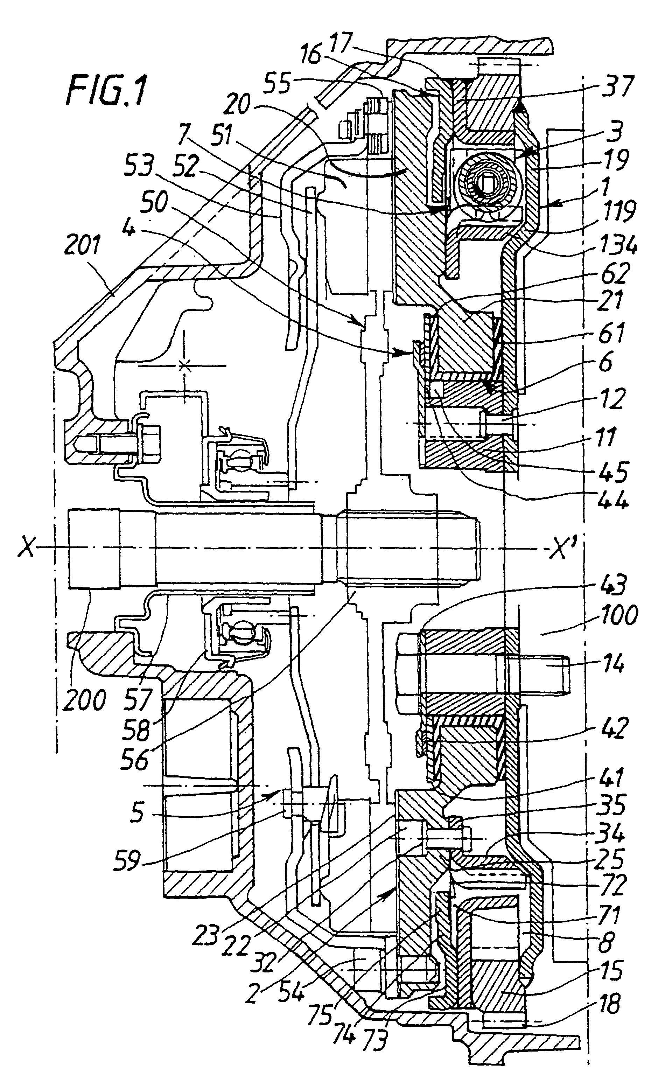

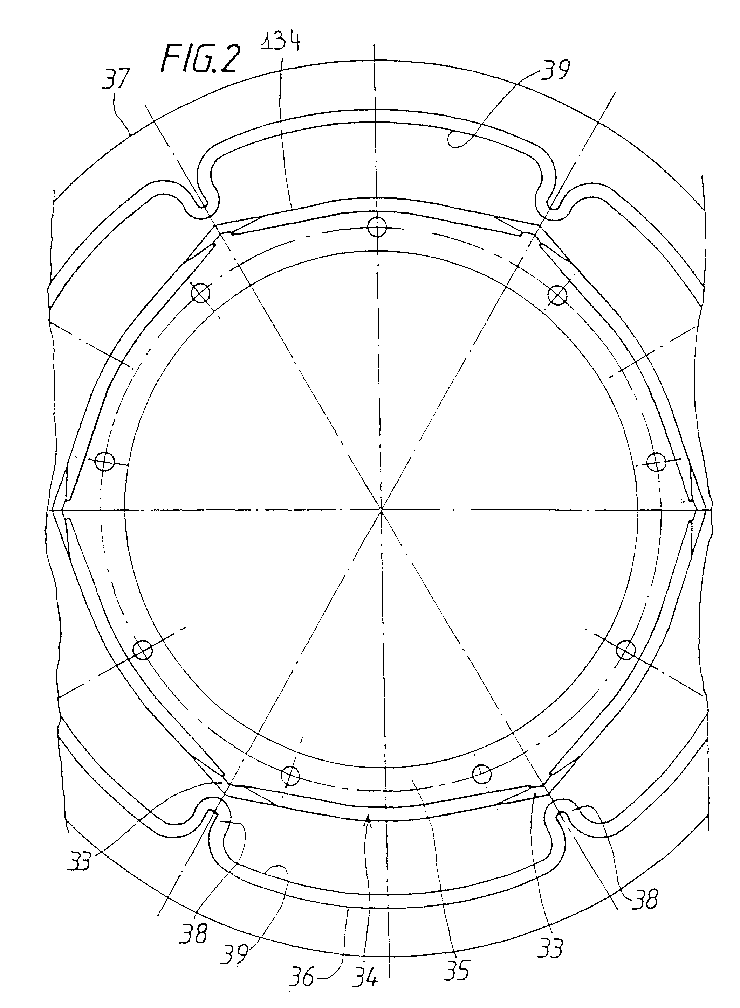

Le double volant amortisseur de torsion selon l'invention comporte des organes élastiques 3 ici lubrifiés et montés dans un logement étanche 8 rempli partiellement d'un agent pâteux ou visqueux, ici sous forme de graisse. Ce logement 8 est fermé par des moyens d'étanchéité 7 comportant dans les figures 1 à 4 deux rondelles 71,72 globalement d'orientation transversale s'étendant globalement parallèlement à la face dorsale d'un plateau de réaction 2 et à distance de celle-ci.

Le double volant amortisseur de torsion représenté dans les figures comporte deux masses coaxiales 1,2 montées mobiles angulairement l'une par rapport à l'autre à l'encontre d'organes élastiques 3 à action circonférentielle et de moyens de frottement 4 à action axiale.

En fonctionnement les masses 1,2 sont montées tournantes autour de l'axe X-X' constituant l'axe de symétrie axial du double volant amortisseur.

La première masse 1 tournante est destinée à être solidarisée en rotation à un premier arbre 100, tandis que la deuxième masse tournante 2 comporte un plateau constituant le plateau de réaction 20 d'un embrayage à friction 5 comportant, de manière connue un disque de friction 50, un plateau de pression 51, un diaphragme 52 et un couvercle 53 destiné à être rapporté par des vis 54 sur le plateau de réaction 20 avec serrage des garnitures de friction, que présente le disque 50 à sa périphérie externe, entre les plateaux 20,51 sous l'action du diaphragme 52 prenant appui sur le couvercle 53, ici en forme d'assiette creuse, dont le fond est troué centralement.

Le plateau de pression 51, en matière moulable ici de la fonte est lié en rotation au couvercle 53, et donc au plateau de réaction 20, par l'intermédiaire de languettes axialement élastiques 55 autorisant un mouvement axial du plateau de pression 51 vis-à-vis du couvercle 53 Les languettes 55 sont ici d'orientation tangentielle.

Ici on a représenté de manière plus foncée le double volant amortisseur objet de l'invention et de manière schématique le disque de friction 50, dont les deux garnitures de friction sont montées de manière élastique dans la direction axiale sur un disque de support (non référencé) solidaire d'un moyeu intérieurement cannelé 56 pour sa liaison en rotation à un second arbre 200. Le disque 50 est donc du type progressif, son disque de support étant conformé en conséquence. En variante, le disque de friction n'est pas progressif, le disque de support étant par exemple noyé dans une garniture de friction. Les plateaux de pression 51 et de réaction 20 présentent donc des faces de friction en vis à vis pour la ou les garnitures de friction du disque 50.

S'agissant d'une application pour véhicule automobile, le premier arbre 100 est ici un arbre menant à savoir l'arbre moteur du véhicule sur le vilebrequin duquel se fixe la première masse 1, tandis que le second arbre 200 est un arbre mené ici l'arbre d'entrée de la boîte de vitesses. Cet arbre 200 traverse le carter 201 fixe de la boîte de vitesses ainsi qu'une trompette 57 solidaire du carter 201 et servant de tube-guide à une butée de débrayage 58 soumise à l'action d'une fourchette de débrayage (non représentée) manoeuvrée par le conducteur du véhicule via la pédale de débrayage ou un système de commande hydraulique ou autre. L'embrayage à friction comme représenté à la figure 1 est normalement engagé - garnitures de friction serrées entre les plateaux 20,51. Pour désengager l'embrayage on agit sur l'extrémité interne des doigts du diaphragme 52 à l'aide de la butée de débrayage 58. Ici l'embrayage est du type poussé et le diaphragme est monté de manière pivotante sur le couvercle 53, ici à l'aide de colonnettes 59 traversant les orifices élargis que présente le diaphragme 52 à la périphérie interne de sa rondelle Belleville. Cette rondelle Belleville, formant la partie périphérique externe du diaphragme 52, agit à sa périphérie externe sur un bossage annulaire fractionné (non référencé) du plateau de pression 51. En agissant en poussant (vers la droite de la figure 1) à l'aide de la butée de débrayage 58 sur l'extrémité interne des doigts du diaphragme 52, on fait pivoter celui-ci autour de la tête profilée des colonnettes 59 pour annuler l'action qu'exerce le diaphragme 52 sur le plateau de pression 51 ; les languettes 55 permettant de libérer alors les garnitures de friction du disque de friction 50 en sorte que le couple moteur n'est plus transmis du vilebrequin 100 à l'arbre d'entrée 200, tandis que lorsque l'embrayage est engagé il y a transmission du couple moteur.

Tout ceci est bien connu de l'homme du métier, sachant que les colonnettes 59 peuvent être remplacées par d'autres moyens de basculement. Par exemple, les moyens de basculement peuvent comporter des pattes issues par découpe et pliage du couvercle 53 en tôle emboutie. Les pattes traversent axialement les orifices élargies du diaphragme pour être repliées radialement vers l'extérieur et former une coude de calage pour une couronne jonc portant l'appui secondaire du diaphragme en remplacement des têtes profilées des colonnettes

Bien entendu en variante l'embrayage peut être du type tiré et le diaphragme peut être remplacé par une rondelle Belleville ou des ressorts à boudin associés à des leviers de débrayage. De même l'embrayage peut être doté d'un dispositif de rattrapage d'usure permettant de compenser l'usure des garnitures de friction du disque 50 et donc de maintenir sensiblement constante la charge qu'exerce le diaphragme 52 ou la rondelle Belleville, ou les ressorts à boudin sur le plateau de pression 51.

Un tel dispositif est décrit par exemple dans le document FR-A-2 424 442 et permet de maintenir sensiblement constante la position du diaphragme lorsque l'embrayage est engagé. La charge exercée sur le plateau de pression 51 est également sensiblement constante lorsque l'embrayage est engagé.

Ici la seconde masse 2, reliée de manière débrayable à l'arbre 200, est montée rotative sur la première masse 1 à l'aide de moyens de palier 6 de centrage consistant ici en un palier lisse à bas coefficient de friction. En variante les moyens de palier 6 consistent en un roulement à billes, de préférence étanche, à une ou deux rangées de billes. Le palier 6 comporte ici deux bagues 61,62 en forme d'équerre délimitant une gorge dans laquelle pénètre la périphérie interne de la seconde masse 2, ici en fonte ou tout autre matière moulable, par exemple de l'aluminium, revêtue d'un matériau au niveau de sa face de frottement destinée à coopérer avec le disque de friction 50.

La première masse 1 présente centralement un moyeu 11 solidaire par des rivets 12 d'un flasque de support 13, ici métallique, parallèle au plateau de réaction 20 de la seconde masse 2 présentant à sa périphérie interne un anneau 21 décalé axialement en direction du flasque 13, ici métallique, par rapport au plateau de réaction 20. C'est cet anneau 21 qui est engagé dans la gorge délimitée par les bagues 61,62. Ainsi le palier 6 intervient radialement entre la périphérie externe du moyeu 11 et la périphérie interne de l'anneau 21 entourant le moyeu 11. Le moyeu 11 et le flasque 13 forment un sous-ensemble grâce aux rivets 12 et présentent chacun en coïncidence axiale des trous (non référencés) pour le passage de vis de fixation 14 de la première masse 1 et donc du double volant amortisseur à l'extrémité du vilebrequin 100.

Cette première masse 1 comporte à sa périphérie externe une couronne de démarreur 15, une couronne extérieure 36, un couvercle 16 ainsi qu'une rondelle d'étanchéité 71, dite première rondelle d'étanchéité, intercalée axialement à serrage entre une portion du couvercle 16 et une portion 37 de la couronne extérieure 36. Les pièces 16,71,36 et 15 sont portées par la périphérie externe du flasque de support 13 et sont métalliques.

Le flasque 13, d'orientation transversale, la couronne extérieure 36 et le couvercle 16 sont ici en tôle emboutie pour réduction des coûts et réalisation d'emboutissages.

Le couvercle 16 présente à sa périphérie externe un rebord annulaire 17 d'onentation axiale permettant d'augmenter l'inertie de la première masse et d'effectuer un centrage lors de l'assemblage des pièces 13,15,36,71,16 de la première masse 1.

La rondelle d'étanchéité 71 est en forme de clinquant métallique souple. La rondelle 71 a donc une faible épaisseur et est élastique dans le sens axial.

La couronne 36 a en section (figure 1) globalement une forme d'équerre en sorte que la portion 37 constitue un prolongement dirigé radialement vers l'extérieur en direction opposée à l'axe X-X'. Le prolongement 37 se raccorde à l'une des extrémités axiales de la couronne 36 de forme annulaire et d'orientation axiale.

Le prolongement 37 est en contact avec la face latérale de la couronne de démarreur 15 tournée vers la seconde masse 2. Le rebord axial 17 est dirigé vers la seconde masse 2.

La périphérie externe de la couronne 36 est en contact intime avec la périphérie interne de la couronne de démarreur 15, dont la denture 18 s'étend radialement au-dessus de la périphérie externe du prolongement 37 et de la périphérie externe du rebord 17. La denture 18 est moins large axialement que la partie principale de la couronne de démarreur 15, en acier traité, servant de centreur à la couronne extérieure 36 et d'appui au prolongement radial 37.

On peut assembler les pièces 16,71,37,15 et 13 à l'aide de rivets ou de boulons traversant chacun lesdites pièces à la faveur des trous prévus en coïncidence axiale dans lesdites pièces.

Ici la fixation de ces pièces 16,71,37,15 et 13 est réalisée à l'aide de trois cordons de soudure visibles en noir à la figure 1.

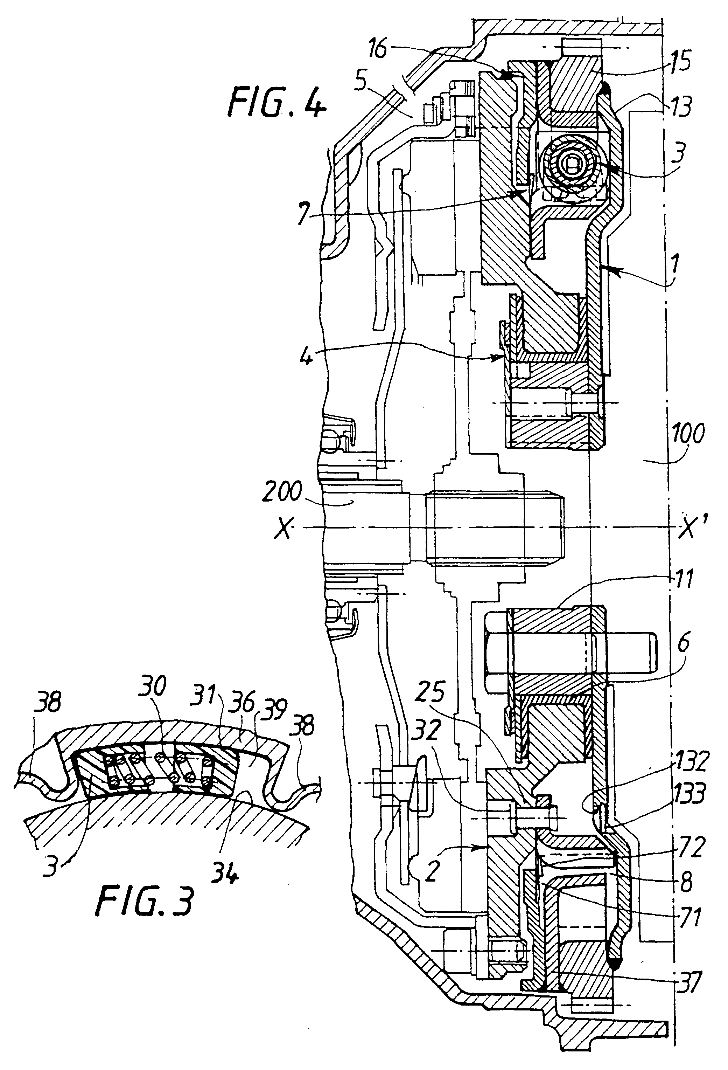

L'autre face latérale de la couronne de démarreur 15 sert d'appui à la périphérie externe du flasque 13. Un léger jeu existe entre l'autre extrémité de la couronne extérieure 36 et le flasque de support 13. La couronne extérieure 36, dite deuxième couronne, entoure, suivant une caractéristique une couronne intérieure 34 métallique ici en tôle emboutie. La couronne intérieure 34, dite première couronne, est suivant une caractéristique de l'invention rapportée sur le plateau de réaction. Cette couronne 34 est de forme annulaire et d'orientation axiale et comporte à l'une de ses extrémités un rebord 35 dirigé radialement vers l'intérieur, c'est-à-dire vers l'axe X-X' de symétrie axial, pour sa fixation par des rivets 32 à la deuxième masse.En variante la fixation est réalisée par des vis , des boulons et autres organes de fixation. La couronne intérieure 34 a donc en section une forme d'equerre avec un rebord radial de fixation 35. La couronne extérieure 36 est dotée circonférentiellement de saillies 38 réalisées par emboutissage et dirigées radialement vers l'intérieur. Les saillies 38 délimitent circonférentiellement des échancrures 39 ouvertes radialement vers l'intérieur et servant de logement aux organes élastiques 3. La couronne intérieure 34 a à sa périphérie externe un profit 134 globalement polygonal, dont les sommets 33 sont en regard des saillies radiales 38 lorsque le double volant amortisseur est en position de repos. La couronne intérieure 34 est économique et permet d'obtenir le bon profil. Ainsi à la figure 3 les côtés du polygone ne sont pas rectilignes et constituent chacun en deux portions d'extrémité rectiligne relièes entre elles par une portion centrale arrondie. Le profil 134 est un profil de contact pour contact avec les organes élastiques 134 de manière décrite ci-après.

Une seconde rondelle d'étanchéité 72 est intercalée à serrage entre le rebord 35 et la deuxième masse 2 ici d'un seul tenant. Les rivets 32 servent donc à la fixation de la couronne intérieure 34 et de la rondelle 72 à la deuxième masse 2. Le rebord 35, la rondelle 72 et la masse 2 présentent donc des trous en coïncidence axiale pour le passage des rivets 32 dont la tête est logée dans un lamage 22 réalisé dans le plateau 20 et débouchant au niveau de la face de friction 23, que présente la deuxième masse 2 pour coopération avec la garniture de friction concernée du disque de friction 50. Le plateau de pression 20 est d'épaisseur décroissante en allant des lamages 22 à la périphérie externe du plateau 20 taraudé pour la fixation des vis 54.

La rondelle d'étanchéité 72 est également en forme de clinquant métallique de faible épaisseur.

La seconde rondelle d'étanchéité 72 est donc axialement élastique et est inclinée à sa périphérie externe en direction du flasque de support 13. La seconde rondelle d'étanchéité 72 est ici plus épaisse que la première rondelle d'étanchéité 71 afin d'être plus raide que celle-ci.

Bien entendu les rondelles 71,72 peuvent avoir la même épaisseur. Les moyens de frottement 4 comportent une rondelle d'application 41 en contact avec la partie transversale de la bague 62 et soumise à l'action d'une rondelle élastique à action axiale 42 prenant appui sur une rondelle 43 servant d'appui aux têtes des vis de fixation 14 de la première masse 1 au vilebrequin 100. Le moyeu 11, porté par la périphérie interne du flasque 13, traverse l'anneau 21 en sorte que les rondelles 41,42,43 s'étendent, avec la partie transversale de la bague 62, du côté de la face de l'anneau 21 tournée vers le disque 20 et les têtes des vis 14. Ceci est rendu possible grâce au décalage axial de l'anneau 21 en direction du flasque 13. Ainsi la seconde masse 2 est creusée à sa périphérie interne pour logement des rondelles 41 à 43 et éviter toute interférence avec le disque 50. Ici la rondelle d'application 41 présente des pattes 44 radiales à sa périphérie interne. Ces pattes 44, formant tenons, sont engagées dans des rainures axiales borgnes 45, formant mortaises, réalisées à la périphérie externe du moyeu 11 au niveau de son extrémité libre la plus éloignée du flasque 13. Ainsi la rondelle 41 est liée en rotation par coopération de formes (liaison du type tenons-mortaises) du moyeu 11 tout en pouvant se déplacer axialement par rapport à celui-ci.

La rondelle élastique 42 est ici une rondelle Belleville et la rondelle 43 est emboutie axialement à sa périphérie externe en direction de la face de friction 22 pour logement de la rondelle élastique 42 et centrage de celle-ci.

Sous l'action de la rondelle Belleville 42 les parties d'orientation transversale des bagues 61,62 sont serrées axialement respectivement entre les faces transversales en vis-à-vis du flasque 13 de l'anneau 21 et entre les faces transversales en vis-à-vis de l'anneau 21 et de la rondelle d'application 41 formant rondelle de pression. Les parties d'orientation axiales, dirigées l'une vers l'autre, des bagues 61,62 sont intercalées radialement entre la périphérie interne de l'anneau 21 et la périphérie externe du moyeu 11 pénétrant à l'intérieur de l'anneau 21 et traversant celui-ci. On notera qu'un jeu axial existe entre les extrémités libres en vis-à-vis des parties axiales des bagues 61,62.

La première rondelle d'étanchéité 71 agit sur la seconde rondelle d'étanchéité 72 et exerce sur celle-ci une force axiale dirigée vers le flasque 13. De même la rondelle Belleville 42 exerce une force axiale sur l'anneau 21, de manière décrite ci-dessus, dirigée vers le flasque 13.

Lorsque la butée de débrayage 58 agit sur les doigts du diaphragme 52 pour désengager l'embrayage, il en résulte une force axiale sur la deuxième masse 2 dirigée également vers le flasque 13.

C'est la raison pour laquelle il est avantageux que l'embrayage à friction soit équipé de manière précitée d'un dispositif de rattrapage d'usure qui peut être en variante de celui décrit dans le document FR-B-2 684 151.

Ainsi ce dispositif de rattrapage d'usure peut agir entre le plateau de pression 51 et le diaphragme 52 ou entre le diaphragme 52 et le fond du couvercle 53.

La force exercée sur les bagues 61,62 lors de l'opération de débrayage est sensiblement constante lors de la durée de vis de l'embrayage. Le palier 6 est ici en matière synthétique.

Les bagues 61,62 peuvent être en matériau thermoplastique semi-cristallin tel que du polyétheréthercétone, tel que de "l'Arlon". Elles peuvent être en tout autre matériau synthétique pouvant être renforcé par des fibres. Bien entendu le coefficient de frottement des bagues 61,62 peut être plus important selon les applications. Les bagues 61,62 sont montées libres. En variante la bague 62 peut être fixée sur la rondelle 41 et la bague 61 peut être fixée sur le flasque 13. Les fixations peuvent être réalisées par collage.

Le profil extérieur de la couronne intérieure 34 est ici hexagonal et la couronne extérieure 36 présente six échancrures 39 délimitées par les saillies 38. Le nombre dépend des applications. Ici six organes élastiques 3 interviennent radialement entre les couronnes 34,36. Ces organes 3 sont logés dans les échancrures 39 et sont comprimés par les sommets 33 comme décrit dans le document EP-A-0 777 059.

Ainsi les organes élastiques 3 sont à action circonférentielle et comportent des ressorts à boudin 30 interposés axialement entre deux coupelles d'appui 31 en contact avec les saillies 38 lorsque le double volant amortisseur est au repos. Les coupelles d'appui 31 sont de forme creuse pour loger les extrémités des ressorts 30 et sont admises à coopérer avec le fond des échancrures 39 et évitent que les ressorts 30 viennent en contact avec ledit fond. Les coupelles 31 évitent également un contact entre les ressorts 30 et la périphérie externe de la couronne intérieure 34. En fonctionnement (figure 3) les ressorts 30, par l'intermédiaire de leurs coupelles 31 d'extrémité, sont comprimés entre un sommet 33 et une saillie 38 comme visible dans les figures 3 à 5 du document EP-A-0 777 059 auquel on pourra se reporter pour plus de précisions. Il se produit un effet de coin entre les coupelles 31 et le profil hexagonal 134 extérieur de la couronne 34. Les coupelles 31 sont ici en matière synthétique et sont admises à venir en contact avec le profil 134 pour transmettre le couple moteur de la première masse 1 à la deuxième masse 2. Grâce au profil des côtés de l'hexagone, on obtient une force de frottement au niveau des coupelles 31 et 34, qui est faible au voisinage de la position de repos et permet de bien filtrer les vibrations dans le domaine de ralenti du moteur à combustion interne du véhicule automobile. En fin de débattement angulaire relatif entre les deux masses 1 et 2, on obtient une grande force de frottement. Bien entendu, des ressorts à boudin 30 peuvent être montés de manière concentrique entre les coupelles d'appui 31 admise à frotter contre la périphérie externe de la couronne intérieure 34.

On notera que le flasque 13 est doté d'une portion emboutie 19 localement axialement vers l'extérieur, en direction opposée au plateau 20 de réaction, au niveau des organes élastiques. La couronne intérieure 34 en chanfreinée en 134 au niveau de son extrémité libre adjacente au flasque 13 avec apparition d'un faible jeu entre l'extrémité libre de la couronne 34 et le flasque 13. Plus précisément la portion 19 forme une gorge délimitée par un fond plat et deux flancs inclinés en sens inverse.

Le chanfrein 134 d'extrémité de la couronne 34 est parallèle au flanc incliné concerné 119 de la gorge 19 de forme trapézoïdale. Ce flanc 119 est celui qui est le plus proche de l'axe X-X'. Ceci est rendu possible car la couronne 34 est métallique ce qui permet de réduire l'encombrement. Pour des raisons de facilité de fabrication, le chanfrein 134 est interrompu au niveau du sommets 33. Grâce à la couronne 34 rapportée sur le plateau 20 on ménage thermiquement les coupelles 31.

Les ressorts 30 sont lubrifiés et un dépôt d'un agent pâteux ou visqueux, tel que de la graisse, est réalisé au niveau de la couronne extérieure 36. C'est pour cette raison qu'il est prévu selon l'invention un dispositif d'étanchéité 7 avec deux rondelles d'étanchéité 71,72 pour éviter que la graisse ne s'échappe du logement étanche 8 délimité axialement par le flasque 13 et les rondelles d'étanchéité 71,72 et radialement par l'anneau 21 associé à la bague 61 et par la couronne extérieure 36.

Le logement 8 est délimité radialement globalement vers l'extérieur par la première masse 1 et radialement vers l'intérieur par le flasque 13 et l'anneau 21.

On notera que le couvercle 16 d'orientation transversale est embouti radialement vers l'intérieur. Ce couvercle 16 présente trois tronçons 73,74,75 décalés axialement les uns par rapport aux autres. Les tronçons 74,75 sont décalés axialement en direction du plateau de réaction 20 par rapport au tronçon externe 73 globalement de même hauteur que le rebord 37 de la couronne extérieure 36. Le tronçon 75, radialement le plus interne, est le plus proche du plateau de réaction 20. Le couvercle 16 s'étend radialement au-dessus de la couronne intérieure 34 lorsque celle-ci est en position de repos. La première rondelle d'étanchéité 71 est plus longue que la deuxième rondelle d'étanchéité 72.

Cette rondelle 71 s'appuie sur les faces des tronçons 73,74 tournées vers le flasque 13 et est plus longue que la rondelle 72.

Un jeu axial existe entre la rondelle 71 et le tronçon interne 75. A l'état libre la rondelle d'étanchéité 71 comporte donc deux tronçons décalés axialement l'un par rapport à l'autre.

La rondelle d'étanchéité 71 vient en appui à sa périphérie interne contre la périphérie externe de la deuxième rondelle d'étanchéité 72 pincée entre le rebord 35 et le plateau 20, tandis que la rondelle 71 est pincée entre le tronçon externe 73 et le prolongement radial 37.

Plus précisément la première rondelle 71 vient à sa périphérie interne en appui sur la face de la seconde rondelle 72 tournée vers le plateau de réaction 20.

Le porte-à-faux de la rondelle 71 est plus important que celui de la rondelle 72. Plus précisément la hauteur du tronçon 75 est plus importante que la hauteur de la partie saillante radialement de la seconde rondelle d'étanchéité 71.

Ainsi la rondelle 72 est plus raide que la rondelle 71 lorsque les rondelles 71,72 ont la même épaisseur. Il en est de même bien entendu lorsque la rondelle 72 est plus épaisse que la rondelle 71.

D'une manière générale la deuxième rondelle d'étanchéité 72 est plus raide que la première rondelle d'étanchéité 71.

La périphérie externe inclinée vers le flasque 13 de la rondelle 72 permet de contraindre la rondelle 71, qui est ainsi déformée à sa périphérie interne en direction du plateau 20. Ainsi les zones de pincement et donc de fixation des rondelles d'étanchéité sont décalées axialement l'une par rapport à l'autre.

La zone de pincement de la rondelle 72 entre le plateau 20 et le rebord radial 35 de fixation est plus éloignée de la couronne de démarreur 15 que ne l'est la zone de pincement de rondelle 71 entre le tronçon 73 et le prolongement radial 37.

Le plateau de réaction est plus épais au niveau du rebord 35 et de la zone de pincement de la rondelle 72. On notera que l'on a rajouté de la matière au plateau de réaction 20 au niveau de sa zone en regard avec le tronçon 73.

Grâce aux dispositions décrites ci-dessus, on obtient une très bonne étanchéité par contact élastique de l'extrémité interne de la première rondelle d'étanchéité 71 avec la périphérie externe de la seconde rondelle d'étanchéité 72, ici plus raide.

La zone de contact des rondelles 71,72 est éloignée de la face dorsale du plateau de réaction 20 en sorte que la graisse est ménagée et s'échauffe moins lorsque le plateau de réaction 20 s'échauffe. En outre on allonge la longueur entre les zones de pincement des rondelles 71,72 ce qui permet une réduction du transfert de chaleur du plateau 20 à la graisse.

Le montage du double volant amortisseur est simple sachant que l'on forme par avance, par rivetage le sous-ensemble seconde masse 2, seconde rondelle d'étanchéité 72, couronne 34.

Ainsi dans une première phase, la couronne de démarreur 15 faisant centreur, on soude sur celle-ci le prolongement radial 37 et le flasque 13 à l'aide de deux cordons de soudure intervenant respectivement à la périphérie externe du prolongement 37 et du flasque 13.

Dans une deuxième phase on fixe le moyeu 11 à la périphérie interne du flasque 13 à l'aide des rivets 12, puis on usine les périphéries interne et externe du moyeu 11 (opération de tournage). Ceci est facile à réaliser du fait que la couronne 15 constitue un centreur.

Ensuite on dépose la graisse sur la périphérie interne de la couronne extérieure 36, on place les ressorts 30 avec les coupelles 31 dans les échancrures 39 et on monte la bague 61 sur le moyeu 11, puis on place le couvercle 16 et la rondelle d'étanchéité 71 entre la seconde rondelle d'étanchéité 72 et le plateau 20.

Cette opération peut être réalisée lors de la réalisation du sous-ensemble 20-72-34.

Bien entendu on monte la bague 62 sur l'anneau 21 et on enfile l'anneau 21 avec la bague 62 sur le moyeu 11 et sur la bague 61.

Enfin on soude le couvercle 16 et la rondelle 71 sur le prolongement 37, le rebord 17 servant à centrer le couvercle 16.

Le cordon de soudure intervient à la périphérie externe du tronçon 73, de la rondelle 71 et du prolongement radial 37. Bien entendu de préférence on introduit la graisse en même temps que les organes élastiques 3.

En variante (figure 4) on peut ne pas former par avance le sous-ensemble 2,72,34 et fixer ultérieurement la rondelle 72 et la couronne 34 sur le plateau 20 à l'aide des rivets 32 pour cela il faut prévoir une des ouvertures 132 dans le flasque 13 en regard des trous de passage des rivets 32 puis de boucher les trous après l'opération de rivetage à l'aide de bouchons 133.

Bien entendu la présente invention n'est pas limitée à l'exemple de réalisation décrit. En particulier la couronne 34 peut comporter des échancrures ouvertes vers l'extérieur en regard des échancrures 39.

Dans ce cas les coupelles 31 peuvent présenter une face dorsale en forme de dièdre pour coopérer avec des saillies des échancrures des couronnes intérieure et extérieure.

Les moyens de palier 6 à la lumière de ce document peuvent consister en un roulement à billes ou en un revêtement de carbone diamant amorphe.

Ainsi qu'il ressort à l'évidence de la description et des dessins le logement étanche 8 est fermé par des moyens d'étanchéité globalement d'orientation transversale et comportant une première rondelle d'étanchéité portée par la première masse 1 et une deuxième rondelle d'étanchéité 72 portée par la seconde masse 2. Ce type d'étanchéité est d'un emploi universel.

La première rondelle d'étanchéité 71 est fixée à sa périphérie externe à la première masse 1, radialement au-dessus de la deuxième rondelle d'étanchéité 72.

La périphérie interne de la première rondelle d'étanchéité 71 coopère - est en contact - avec la périphérie externe de la seconde rondelle d'étanchéité 72 fixée à sa périphérie interne à la seconde masse 2.

Ainsi, les ressorts 30 peuvent être logés dans des fenêtres réalisées en vis-à-vis dans des rondelles de guidage et dans un voile solidaire respectivement l'une de l'autre des parties comme visible dans le document FR-B-2 587 075.

Plus précisément la rondelle 72 est fixée sur une surépaisseur 25 formant bossage d'appui que présente la seconde masse au niveau des rivets de fixation 32 (figures 1 et 4). La surépaisseur 25 peut être fragmentée en secteur d'appui grâce à des fentes séparant deux à deux les secteurs d'appui.Cela permet de mieux refroidir la couronne intérieure.

Grâce au bossage 25 dirigé vers le fiasque 13 on éloigne axialement les rondelles d'étanchéité de la face dorsale du plateau de réaction 20 tournée vers le flasque 13. Les rondelles 71,72 sont globalement parallèles à ladite face dorsale opposée à la face de friction 23.

La deuxième rondelle d'étanchéité est ainsi plus éloignée de la face de friction 23 et donc moins chaude. L'anneau 21 est également éloigné de la face de friction 32 et est donc moins chaud. Le palier lisse 61,62 empêche la graisse de sortir du fait qu'il appartient aux moyens de frottement 4.

La première rondelle d'étanchéité 71 est admise à frotter contre la deuxième rondelle d'étanchéité 72 lors du débattement angulaire relatif entre les deux masses 1,2. Cette rondelle 71 est en appui élastique contre la deuxième rondelle 72 plus raide et ici plus éloignée de la couronne 15 que ne l'est la rondelle 71.

La rondelle 71 exerce une force dirigée vers le flasque 13, c'est-à-dire dans le même sens que la force de débrayage.

Dans le cas d'un embrayage du type tiré, la force sera bien sûr exercée à l'opposé du flasque 13 et toujours dans ce cas dans le même sens que la force de débrayage.

Bien entendu, un patin ou un traitement thermique d'anti-usure pourra être utilisé sur l'une ou l'autre des rondelles ou les deux, entre leurs deux faces de frottement. La rondelle 72 peut être en matériau thermiquement isolant pour ménager encore la couronne 34.

On peut très bien remplir le logement 8 après assemblage des pièces du double volant amortisseur. Dans ce cas il faut, comme décrit dans le document FR-B-2 587 075 prévoir des trous par exemple dans le flasque 13 que l'on rebouche après à l'aide de bouchons.

On notera que la couronne intérieure 34 s'étend radialement au-dessus de l'anneau 21 interne de la seconde masse 2. Le tronçon intermédiaire 74 du couvercle 16 peut être supprimé de sorte que la première rondelle peut être plane.

On appréciera que grâce aux cordons de soudure précités, on obtient une étanchéité parfaite.

Bien entendu on peut prévoir d'autre mode de réalisation par exemple des rivets comme décrit dans le document FR-B-2 587 075.

Dans ce cas il faut prévoir des joints supplémentaires. En variante on peut réaliser des fixations par sertissage.

Dans les figures les bossages 25 sont venus de moulage avec le plateau de réaction et on peut prévoir dans les bossages des canaux débouchant dans les lamages 22 au niveau de la zone de contact entre les rondelles 71 et 72 afin de créer un refroidissement lorsque le disque de friction 50 est libéré. Le plateau de réaction 20 porte une surépaisseur 25. Cette surépaisseur est solidaire du plateau de réaction 20 et peut consister en une rondelle thermiquement isolante, unique ou fragmentée grâce à des fentes interposée entre le plateau 20 et la rondelle d'étancheité 72 en étant fixée au plateau 20 à l'aide des organes de fixation 32, ici sous forme de rivets. Ceci simplifie le plateau de réaction 20.

En variante, la surépaisseur est formée en partie par un bossage et en partie par une rondelle thermiquement isolante, unique ou fragmentée. Les rondelles d'étanchéité ne sont pas forcement en contact l'une avec l'autre. Elles peuvent former entre elles un labyrinthe.

La rondelle 72 peut-être remplacée par une pièce de contact et présenter, à la faveur d'un tronçon incliné, une jupe annulaire d'orientation axiale formant une portée de contact pour un joint d'étanchéité dynamique monté sur le couvercle 16. Ce joint présente par exemple deux branches s'étendant de part et d'autre du couvercle pour venir se pincer sur le couvercle. Un jeu radial existe entre le joint et la périphérie interne du couvercle 16.

Ce joint peut donc se déplacer radialement par rapport au couvercle en étant en contact avec la jupe de la pièce de contact pincée entre le rebord 35 de la couronne intérieure et la surépaisseur 25. Pour plus de précision, on se reportera au document FR-97 15 908 déposé le 12 décembre 1997. Toutes les variantes illustrées dans ce document sont envisageables.

La couronne intérieure 34 selon l'invention permet de réduire la température au niveau du profil de contact 134 de la couronne avec les coupelles 31.

Autrement dit, la température au niveau de la périphérie externe de la couronne 34 rapportée sur le plateau de la de réaction 20 est moins élevée que si la couronne était d'un seul tenant avec le plateau de réaction 20. Cette couronne 34 ( distincte du plateau de réaction 20 ) a une partie d'orientation axiale qui peut être aisément façonnée pour former le profil de contact désirée pour les coupelles 31.

Le profil peut être distincte de celui de la figure 3. Ce profile n'est pas forcément globalement de forme trapézoidale. Ce profil est tel que lors d'un mouvement relatif entre les deux masses la distance radiale entre les deux couronnes 36,34 diminue.

Par exemple, dans l'exemple de la réalisation de la figure 3 , en supposant la couronne extérieure 36 fixe, on voit que les sommets 33 entrainent une première série de coupelles 31, l'autre série étant en appui les saillies 38.

Bien entendu la rondelle 72 peut être supprimée , la rondelle 71 venant en contact avec le plateau de réaction 20, en formant un labyrinthe avec celui-ci pour empêcher la graisse de sortir. Le rebord 35 peut être prolongé vers l'intérieur pour entraîner avec jeu circonférentiel la partie verticale de la bague 61. Ainsi, la couronne 34 peut appartenir à un dispositif de frottement.

## Revendications

1. Double volant amortisseur de torsion comportant deux masses coaxiales (1, 2) montées rotatives l'une par rapport à l'autre à l'encontre d'organes élastiques (3), dans lequel l'une des masses, dite première masse (1), présente des échancrures (39) radialement ouvertes vers l'intérieur pour logement des organes élastiques (3) comprenant chacun au moins un ressort à boudin (30) interposé entre deux coupelles d'appui (31) et dans lequel l'autre masse (2), dite deuxième masse (2), comporte, d'une part, un plateau (20) constituant le plateau de réaction d'un embrayage à friction (5), et, d'autre part, porte un profil de contact (34) pour contact avec les coupelles d'appui (31) des organes élastiques (3), **caractérisé en ce que** le profil de contact (34) appartient à la périphérie externe d'une première couronne d'orientation axiale (34) rapportée sur le plateau de réaction (20).

2. Double volant amortisseur selon la revendication 1, **caractérisé en ce que** la première couronne (34) à, en section, une forme d'équerre et comporte un rebord radial de fixation (35) dirigé vers l'intérieur pour sa fixation sur le plateau de réaction.

3. Double volant selon la revendication 2, **caractérisé en ce que** le rebord radial de fixation (35) est fixé sur une surépaisseur (25) solidaire du plateau de réaction (20).

4. Double volant selon la revendication 3, **caractérisé en ce** la surépaisseur consiste en un bossage (25) du plateau de réaction (20).

5. Double volant selon la revendication 1, **caractérisé en ce que** la première masse (1) présente une deuxième couronne (36) d'orientation axiale dans laquelle sont formées les échancrures (39) pour logement des organes élastiques (3) et **en ce que** la deuxième couronne (36) entoure la première couronne (34).

6. Double volant selon la revendication 5, **caractérisé en ce que** la première couronne (34) présente un profil de contact globalement de forme trapézoïdale en regard des échancrures (39) pour logement des organes élastiques (3).

7. Double volant selon la revendication 5, **caractérisé en ce que** la deuxième couronne (36) et la première couronne (34) sont en tôle emboutie.

8. Double volant selon la revendication 1, **caractérisé en ce que** la seconde masse (2) présente un anneau (21) à sa périphérie interne, **en ce que** l'anneau (21) est décalé axialement en direction opposée du plateau de réaction (20) et **en ce que** la première couronne (34) s'étend radialement au-dessus dudit anneau (21).

9. Double volant selon la revendication 8, **caractérisé en ce que** la première masse (1) présente à sa périphérie interne un moyeu (11) et **en ce que** des moyens de palier (6) interviennent radialement entre la périphérie interne de l'anneau (21) et le moyeu (11).

10. Double volant selon la revendication 9, **caractérisé en ce que** les moyens de palier consistent en deux bagues (61,62) en forme d'équerre avec une partie d'orientation axiale tournée l'une vers l'autre et interposée entre la périphérie externe du moyeu (11) et la périphérie interne de l'anneau (21) et **en ce que** le moyeu (11) traverse l'anneau (21).

11. Double volant selon la revendication 10, **caractérisé en ce que** la première masse (1) comporte un flasque de support (13) portant à sa périphérie interne le moyeu (11), **en ce que** l'une des bagues (61) comporte une partie transversale insérée entre le flasque de support (13) et la face latérale en vis-à-vis de l'anneau (21) et **en ce que** l'autre bague (62) présente une partie transversale insérée entre l'autre face latérale de l'anneau (21) et une rondelle d'application (41) appartenant à des moyens de frottement à action axiale.

12. Double volant selon la revendication 11, **caractérisé en ce que** la rondelle d'application (41) est liée en rotation par coopération de formes au moyeu (11) et est soumise à l'action d'une rondelle élastique à action axiale (42) prenant appui sur une rondelle (43) servant d'appui à des têtes de fixation (12) du moyeu (11) à un arbre menant.

13. Double volant selon la revendication 5, **caractérisé en ce que** la première masse (1) comporte une couronne de démarreur (15), un flasque de support (13) et une moyeu (11) et **en ce que** le flasque de support (13) est fixé à sa périphérie externe à la couronne de démarreur (15) et porte à sa périphérie interne le moyeu (11).

14. Double volant selon la revendication 13, **caractérisé en ce que** la périphérie externe de la couronne intérieure (36) est en contact intime avec la périphérie interne de la couronne de démarreur (15).

15. Double volant selon la revendication 14, **caractérisé en ce que** la deuxième couronne (36) présente un prolongement radial (37) fixé à la couronne de démarreur (15) du côté de celle-ci opposé au flasque de support (13).

16. Double volant amortisseur selon la revendication 2, **caractérisé en ce que** des moyens d'étanchéité (7) sont prévus pour assurer l'étanchéité du logement (8) dans lequel sont montés les organes élastiques (3) et **en ce que** des moyens d'étanchéité comportent une rondelle (72) pincée à sa périphérie interne entre la seconde masse (2) et le rebord radial de fixation (35) de la première couronne (34).

17. Double volant amortisseur selon la revendication 16, **caractérisé en ce que** la rondelle est une seconde rondelle d'étanchéité (72).

18. Double volant selon la revendication 17, **caractérisé en ce que** la première masse (1) porte une première rondelle d'étanchéité (71), **en ce que** la première rondelle d'étanchéité (71) est fixée à sa périphérie externe à la première masse (1) radialement au dessus de la deuxième rondelle d'étanchéité (72) et **en ce que** la périphérie interne de la première rondelle d'étanchéité (71) coopère avec la périphérie externe de la seconde rondelle d'étanchéité (72).

19. Double volant selon la revendication 18, **caractérisé en ce que** la première masse (1) présente un couvercle (16) et une deuxième couronne d'étanchéité d'orientation axiale (36) entourant la première couronne (34), **en ce que** la deuxième couronne (36) présente les échancrures (39) pour logement des organes élastiques (3) **en ce que** la deuxième couronne (36) présente un prolongement radial (37) et **en ce que** la première rondelle d'étanchéité est pincée à sa périphérie externe entre le couvercle (16) et le prolongement radial (37) de la deuxième couronne (36).

20. Double volant selon la revendication 18, **caractérisé en ce que** la deuxième rondelle d'étanchéité (72) est plus raide que la première rondelle d'étanchéité (71).

21. Double volant selon la revendication 20, **caractérisé en ce que** les deux rondelles d'étanchéité (71, 72) consistent en des clinquants.

22. Double volant selon la revendication 18, **caractérisé en ce que** le plateau de réaction (20) présente une surépaisseur 25, **en ce que** la deuxième rondelle d'étanchéité (72) est en contact, d'une part, avec la surépaisseur du plateau de réaction (20) de la seconde masse (2) et, d'autre part, localement par sa face tournée vers le plateau de réaction (20) avec la périphérie interne de la première rondelle d'étanchéité (71).

23. Double volant selon la revendication 21, **caractérisé en ce que** les deux rondelles d'étanchéité (71, 72) sont globalement parallèles à la face du plateau de réaction (20) tournée vers la première couronne (34).

## Patentansprüche

1. Torsionsdämpfungs-Zweimassenschwungrad mit zwei koaxialen Massen (1, 2), die relativ zueinander entgegen elastischen Gliedern (3) drehbar angebracht sind, wobei eine der Massen, die so genannte erste Masse (1), Aussparungen (39) aufweist, die zur Aufnahme der elastischen Glieder (3) nach innen hin radial offen sind, wobei die elastischen Glieder jeweils mindestens eine Schraubenfeder (30) umfassen, die zwischen zwei Stütztellern (31) angeordnet ist, und wobei die andere Masse (2), die so genannte zweite Masse (2), einerseits eine die Gegendruckplatte einer Reibungskupplung (5) bildende Platte (20) umfasst und andererseits ein Kontaktprofil (34) zum Kontakt mit den Stütztellem (31) der elastischen Glieder (3) trägt, **dadurch gekennzeichnet, dass** das Kontaktprofil (34) Teil des Außenumfangs eines ersten Kranzes (34) mit axialer Ausrichtung ist, der an der Gegendruckplatte (20) angebracht ist.

2. Dämpfungs-Zweimassenschwungrad nach Anspruch 1, **da-durch gekennzeichnet, dass** der erste Kranz (34) im Schnitt eine rechtwinklige Form aufweist und einen radialen Befestigungsrand (35) enthält, der zu seiner Befestigung an der Gegendruckplatte nach innen gerichtet ist.

3. Zweimassenschwungrad nach Anspruch 2, **dadurch gekennzeichnet, dass** der radiale Befestigungsrand (35) an einer fest mit der Gegendruckplatte (20) verbundenen Überdicke (25) befestigt ist.

4. Zweimassenschwungrad nach Anspruch 3, **dadurch ge-kennzeichnet, dass** die Überdicke aus einem Nocken (25) der Gegendruckplatte (20) besteht.

5. Zweimassenschwungrad nach Anspruch 1, **dadurch gekennzeichnet, dass** die erste Masse (1) einen zweiten Kranz (36) mit axialer Ausrichtung aufweist, in dem die Aussparungen (39) zur Aufnahme der elastischen Glieder (3) ausgebildet sind, und dass der zweite Kranz (36) den ersten Kranz (34) umgibt.

6. Zweimassenschwungrad nach Anspruch 5, **dadurch ge-kennzeichnet, dass** der erste Kranz (34) ein allgemein trapezförmiges Kontaktprofil gegenüber den Aussparungen (39) zur Aufnahme der elastischen Glieder (3) aufweist.

7. Zweimassenschwungrad nach Anspruch 5, **dadurch gekennzeichnet, dass** der zweite Kranz (36) und der erste Kranz (34) aus Buckelblech bestehen.

8. Zweimassenschwungrad nach Anspruch 1, **dadurch gekennzeichnet, dass** die zweite Masse (2) an ihrem Innenumfang einen Ring (21) aufweist, dass der Ring (21) axial in der der Gegendruckplatte (20) entgegengesetzten Richtung versetzt ist und dass sich der erste Kranz (34) radial außerhalb des Rings (21) erstreckt.

9. Zweimassenschwungrad nach Anspruch 8, **dadurch gekennzeichnet, dass** die erste Masse (1) an ihrem Innenumfang eine Nabe (11) aufweist und dass Lagermittel (6) radial zwischen dem Innenumfang des Rings (21) und der Nabe (11) wirken.

10. Zweimassenschwungrad nach Anspruch 9, **dadurch gekennzeichnet, dass** die Lagermittel aus zwei rechtwinkligen Hülsen (61, 62) mit einem axial ausgerichteten Teil bestehen, die zueinander weisen und zwischen dem Außenumfang der Nabe (11) und dem Innenumfang des Rings (21) angeordnet sind, und dass die Nabe (11) den Ring (21) durchquert.

11. Zweimassenschwungrad nach Anspruch 10, **dadurch gekennzeichnet, dass** die erste Masse (1) einen Stützflansch (13) aufweist, der an seinem Innenumfang die Nabe (11) trägt, dass eine der Hülsen (61) einen zwischen dem Stützflansch (13) und der gegenüberliegenden Seitenfläche des Rings (21) eingeführten Querteil enthält und dass die andere Hülse (62) einen zwischen der anderen Seitenfläche des Rings (21) und einer Andrückscheibe (41), die Teil der axial wirkenden Reibungsmittel ist, eingeführten Querteil aufweist.

12. Zweimassenschwungrad nach Anspruch 11, **dadurch gekennzeichnet, dass** die Andrückscheibe (41) formschlüssig drehfest mit der Nabe (11) verbunden ist und der Wirkung einer axial wirkenden elastischen Scheibe (42) ausgesetzt ist, die sich auf einer Scheibe (43) abstützt, welche als Stütze für die Köpfe (12) zur Befestigung der Nabe (11) an einer Antriebswelle dient.

13. Zweimassenschwungrad nach Anspruch 5, **dadurch gekennzeichnet, dass** die erste Masse (1) einen Anlasserkranz (15), einen Stützflansch (13) und eine Nabe (11) umfasst und dass der Stützflansch (13) an seinem Außenumfang an dem Anlasserkranz (15) befestigt ist und an seinem Innenumfang die Nabe (11) trägt.

14. Zweimassenschwungrad nach Anspruch 13, **dadurch gekennzeichnet, dass** der Außenumfang des Kranzes (36) mit dem Innenumfang des Anlasserkranzes (15) in engem Kontakt steht.

15. Zweimassenschwungrad nach Anspruch 14, **dadurch gekennzeichnet, dass** der zweite Kranz (36) eine radiale Verlängerung (37) aufweist, die auf der Seite des Anlasserkranzes (15), die dem Stützflansch (13) gegenüberliegt, am Anlasserkranz befestigt ist.

16. Zweimassenschwungrad nach Anspruch 2, **dadurch gekennzeichnet, dass** Dichtungsmittel (7) vorgesehen sind, um die Dichtheit der Aufnahme (8) zu gewährleisten, in der die elastischen Glieder (3) angebracht sind, und dass die Dichtungsmittel eine Scheibe (72) umfassen, die an ihrem Innenumfang zwischen der zweiten Masse (2) und dem radialen Befestigungsrand (35) des ersten Kranzes (34) eingeklemmt ist.

17. Zweimassenschwungrad nach Anspruch 16, **dadurch gekennzeichnet, dass** es sich bei der Scheibe um eine zweite Dichtungsscheibe (72) handelt.

18. Zweimassenschwungrad nach Anspruch 17, **dadurch gekennzeichnet, dass** die erste Masse (1) eine erste Dichtungsscheibe (71) trägt, dass die erste Dichtungsscheibe (71) an ihrem Außenumfang radial außerhalb der zweiten Dichtungsscheibe (72) an der ersten Masse (1) befestigt ist und dass der Innenumfang der ersten Dichtungsscheibe (71) mit dem Außenumfang der zweiten Dichtungsscheibe (72) zusammenwirkt.

19. Zweimassenschwungrad nach Anspruch 18, **dadurch gekennzeichnet, dass** die erste Masse (1) einen Deckel (16) und einen den ersten Kranz (34) umgebenden zweiten Dichtungskranz (36) mit axialer Ausrichtung aufweist, dass der zweite Kranz (36) Aussparungen (39) zur Aufnahme elastischer Glieder (3) aufweist, dass der zweite Kranz (36) eine radiale Verlängerung (37) aufweist und dass die erste Dichtungsscheibe an ihrem Außenumfang zwischen dem Deckel (16) und der radialen Verlängerung (37) des zweiten Kranzes (36) eingeklemmt ist.

20. Zweimassenschwungrad nach Anspruch 18, **dadurch gekennzeichnet, dass** die zweite Dichtungsscheibe (72) steifer ist als die erste Dichtungsscheibe (71).

21. Zweimassenschwungrad nach Anspruch 20, **dadurch gekennzeichnet, dass** die beiden Dichtungsscheiben (71, 72) aus Metallfolien bestehen.

22. Zweimassenschwungrad nach Anspruch 18, **dadurch gekennzeichnet, dass** die Gegendruckplatte (20) eine Überdicke 25 aufweist, dass die zweite Dichtungsscheibe (72) einerseits mit der Überdicke der Gegendruckplatte (20) der zweiten Masse (2) und andererseits durch ihre zur Gegendruckplatte (20) weisende Seite lokal mit dem Innenumfang der ersten Dichtungsscheibe (71) in Kontakt steht.

23. Zweimassenschwungrad nach Anspruch 21, **dadurch gekennzeichnet, dass** sich die beiden Dichtungsscheiben (71, 72) allgemein parallel zu der zum ersten Kranz (34) weisenden Seite der Gegendruckplatte (20) erstrecken.

## Claims

1. Double torsion damping flywheel comprising two coaxial masses (1, 2) mounted so as to rotate with respect to each other counter to elastic members (3), in which one of the masses, referred to as the first mass (1), has scallops (39) radially open towards the inside for housing the elastic members (3) each comprising at least one coiled spring (30) interposed between two support cups (31) and in which the other mass (2), referred to as the second mass (2), comprises firstly a plate (20) constituting the reaction plate of a friction clutch (5) and secondly carries a contact profile (34) for contact with the support cups (31) of the elastic members (3), **characterised in that** the contact profile (34) belongs to the external periphery of a first axially oriented ring (34) attached to the reaction plate (20).

2. Double damping flywheel according to Claim 1, **characterised in that** the first ring (34) has, in cross-section, the form of a right-angled bracket and comprises a radial fixing ring (35) directed towards the inside for fixing it to the reaction plate.

3. Double flywheel according to Claim 2, **characterised in that** the radial fixing rim (35) is fixed to a thicker part (25) integral with the reaction plate (20).

4. Double flywheel according to Claim 3, **characterised in that** the thicker part consists of a protrusion (25) on the reaction plate (20).

5. Double flywheel according to Claim 1, **characterised in that** the first mass (1) has a second axially oriented ring (36) in which the scallops (39) are formed for housing the elastic members (3) and **in that** the second ring (36) surrounds the first ring (34).

6. Double flywheel according to Claim 5, **characterised in that** the first ring (34) has a contact profile roughly trapezoidal in shape facing the scallops (39) for housing the elastic members (3).

7. Double flywheel according to Claim 5, **characterised in that** the second ring (36) and the first ring (34) are made from pressed sheet metal.

8. Double flywheel according to Claim 1, **characterised in that** the second mass (2) has an annulus (21) at its internal periphery, **in that** the annulus (21) is offset axially in the opposite direction to the reaction plate (20) and **in that** the first ring (34) extends radially above the said annulus (21).

9. Double flywheel according to Claim 8, **characterised in that** the first mass (1) has at its internal periphery a hub (11) and **in that** bearing means (6) act radially between the internal periphery of the annulus (21) and the hub (11).

10. Double flywheel according to Claim 9, **characterised in that** the bearing means consist of two races (61, 62) in the form of a square bracket with an axially oriented part turned towards each other and disposed between the external periphery of the hub (11) and the internal periphery of the annulus (21) and **in that** the hub (11) passes through the annulus (21).

11. Double flywheel according to Claim 10, **characterised in that** the first mass (1) comprises a support plate (13) carrying the hub (11) at its internal periphery, **in that** one of the races (61) comprises a transverse part inserted between the support plate (13) and the facing lateral face of the annulus (21) and **in that** the other race (62) has a transverse part inserted between the other lateral face of the annulus (21) and an application washer (41) belonging to axially acting friction means.

12. Double flywheel according to Claim 11, **characterised in that** the application washer (41) is rotationally connected to the hub (11) by cooperation of shapes and is subjected to the action of an axially acting elastic washer (42) bearing on a washer (43) serving as an abutment for heads (12) for fixing the hub (11) to a driving shaft.

13. Double flywheel according to Claim 5, **characterised in that** the first mass (1) comprises a starter ring (15), a support plate (13) and a hub (11) and **in that** the support plate (13) is fixed at its external periphery to the starter ring (15) and carries the hub (11) at its internal periphery.

14. Double flywheel according to Claim 13, **characterised in that** the external periphery of the internal ring (36) is in close contact with the internal periphery of the starter ring (15).

15. Double flywheel according to Claim 14, **characterised in that** the second ring (36) has a radial extension (37) fixed to the starter ring (15) on the side thereof opposite to the support plate (13).

16. Double damping flywheel according to Claim 2, **characterised in that** sealing means (7) are provided to provide the seal for the housing (8) in which the elastic members (3) are mounted and **in that** sealing means comprise a washer (72) gripped at its internal periphery between the second mass (2) and the radial fixing rim (35) of the first ring (34).

17. Double damping flywheel according to Claim 16, **characterised in that** the washer is a second sealing washer (72).

18. Double flywheel according to Claim 17, **characterised in that** the first mass (1) carries a first sealing washer (71), **in that** the first sealing washer (71) is fixed at its external periphery to the first mass (1) radially above the second sealing washer (72) and **in that** the internal periphery of the first sealing washer (71) cooperates with the external periphery of the second sealing washer (72).

19. Double flywheel according to Claim 18, **characterised in that** the first mass (1) has a cover (16) and a second axially oriented sealing ring (36) surrounding the first ring (34), **in that** the second ring (36) has scallops (39) for housing the elastic members (3), **in that** the second ring (36) has a radial extension (37) and **in that** the first sealing washer is gripped at its external periphery between the cover (16) and the radial extension (37) of the second ring (36).

20. Double flywheel according to Claim 18, **characterised in that** the second sealing washer (72) is stiffer than the first sealing washer (71).

21. Double flywheel according to Claim 20, **characterised in that** the two sealing washers (71, 72) consist of metal foils.

22. Double flywheel according to Claim 18, **characterised in that** the reaction plate (20) has a thicker part (25), **in that** the second sealing washer (72) is in contact firstly with the thicker part of the reaction plate (20) of the second mass (2) and secondly locally through its face turned towards the reaction plate (20) with the internal periphery of the first sealing washer (71).

23. Double flywheel according to Claim 21, **characterised in that** the two sealing washers (71, 72) are roughly parallel to the face of the reaction plate (20) turned towards the first ring (34).
